Europäisches Patentamt

European Patent Office

Office européen des brevets

(11) Publication number: **0 412 752 A1**

# EUROPEAN PATENT APPLICATION

(21) Application number: 90308635.3

(22) Date of filing: 06.08.90

(51) Int. Cl.⁵: **F16L 55/162, F16L 58/10, F16L 1/028**

(30) Priority: 07.08.89 US 389952

(43) Date of publication of application:
13.02.91 Bulletin 91/07

(84) Designated Contracting States:
AT BE CH DE DK ES FR GB GR IT LI LU NL SE

(71) Applicant: **GREAT LAKES & SOUTHERN RESEARCH LIMITED PARTNERSHIP**
**168 Sylvan Drive**
**Atlantic Beach, Florida 32233(US)**

(72) Inventor: **Lyon, Lyman R.**
**1200 Orchard Ridge Road**
**Bloomfield Hills, Michigan 48304(US)**

(74) Representative: **Allen, William Guy Fairfax et al**
**J.A. KEMP & CO. 14 South Square Gray's Inn**
**London WC1R 5LX(GB)**

(54) Pipe liner and method of installation thereof.

(57) A liner (10) for and a method of lining in which an imperforate liner (14) is disposed in an imperforate ejector tube (18). A resin carrier tube (19) communicates with the exterior surface of the liner and the interior surface of the pipe (10). A poly- merizable resin (32) is transmitted to a manifold (38,40) which distributes the resin into contact with the exterior of the liner and the interior surface of said pipe (12).

FIG. 1

## PIPE LINER AND METHOD OF INSTALLATION THEREOF

The invention relates generally to the rehabilitation of deteriorated underground piping and more particulary to renovation of such piping by inserting a liner into the deteriorated pipe. A more specific problem solved by the present invention is that, in some instances, the liner must be inserted into pipes that are filled with water. The present invention relates to a liner and pipe lining method that can be utilized to line water filled pipes, such as sewer pipes.

According to the present invention there is provided a liner for a pipe comprising an imperforate liner, an imperforate tube surrounding said liner, a resin carrier tube communicating with the exterior surface of said imperforate liner tube and the interior surface of said pipe, a polymerizable resin in said resin tube, means for concomitantly retracting said imperforate tube and said resin carrier tube from said pipe, and means for ejecting said resin from said resin carrier tube into contact with the exterior of said liner and the interior surface of said pipe.

The invention also provides a method of lining a pipe comprising the steps of providing an imperforate pipe liner, surrounding said liner with an imperforate ejector tube having squeegee means at one end engageable with an interior wall of said pipe, inserting said ejector tube and liner into said pipe, retracting said ejector tube relative to said liner and pipe, concomitantly injecting a resin onto an external surface of said liner and the internal surface of said pipe, and retracting said ejector tube from said pipe.

In order that the present invention may more readily be understood, the following description is given, merely by way of example, reference being made to the accompanying drawings in which:-

Figure 1 is a cross-sectional view of damaged pipe in the process of being lined by the process and with one embodiment of liner of the present invention;
Figure 2 is a cross-sectional view taken along the line 2-2 of Figure 1;
Figure 3 is a cross-sectional view taken along the line 3-3 of Figure 1;
Figure 4 is a view of the externally disposed resin tube; and
Figure 5 is a view of a modified distribution manifold used for a two part resin system.

Referring to the drawing, a pipe liner 10 constructed in accordance with the present invention is shown in association with a sewer pipe 12 that is to be rehabilitated. The pipe liner 10 comprises a relatively thin imperforate elastomeric sleeve 14, for example, polyeurethane, having an external sheath 16 of, for example, fiberglass cloth or mat. The liner 10 has an outside diameter substantially equal to the inside diameter of the pipe 12.

In accordance with one feature of this invention, the liner 10 is disposed within an imperforate water ejector tube 18 made from, for example, flexible PVC or polyethylene. The ejector tube 18 is connected to a resin distribution manifold 19 having a plurality of annular squeegees 20 that move standing water in the sewer pipe 12 longitudinally thereof as the tube 18 is withdrawn, as will be described.

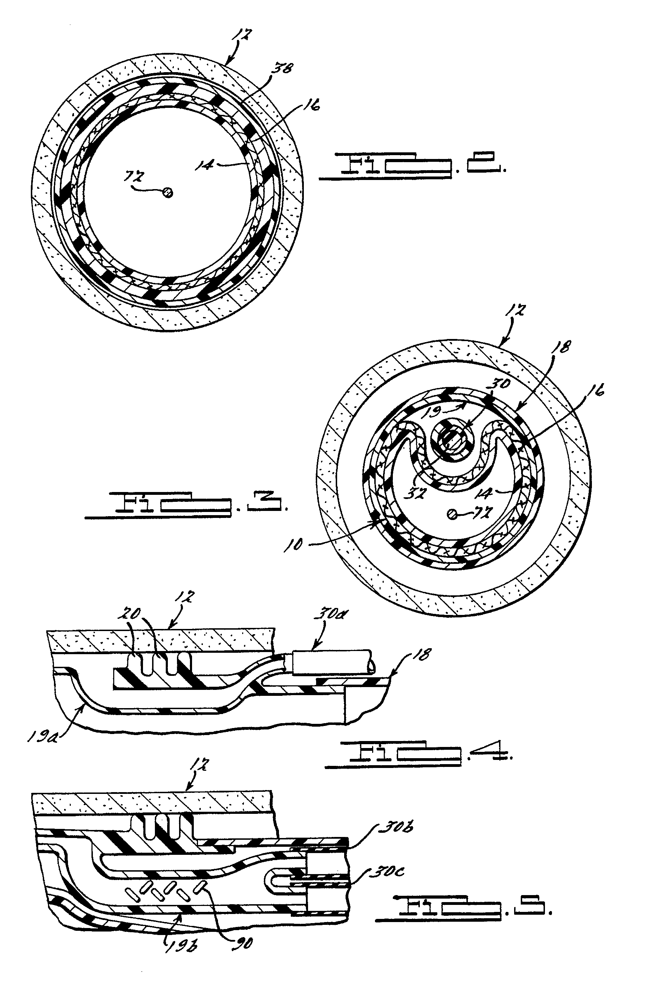

In accordance with another feature of the invention, a resin supply tube 30 for the transport of a polymerizable resin system 32 is disposed, in one embodiment, between the liner 10 and the ejector tube 18 to carry resin to the distribution manifold 19. If desired, a tube 30a can be disposed externally of the ejector tube 18, as seen in Figure 4. The resin 32 can be premixed and injected into the tube 30a, dual resin tubes 30b and 30c can be employed to carry the two components of a two part resin system to the distribution manifold 19, as seen in Figure 5.

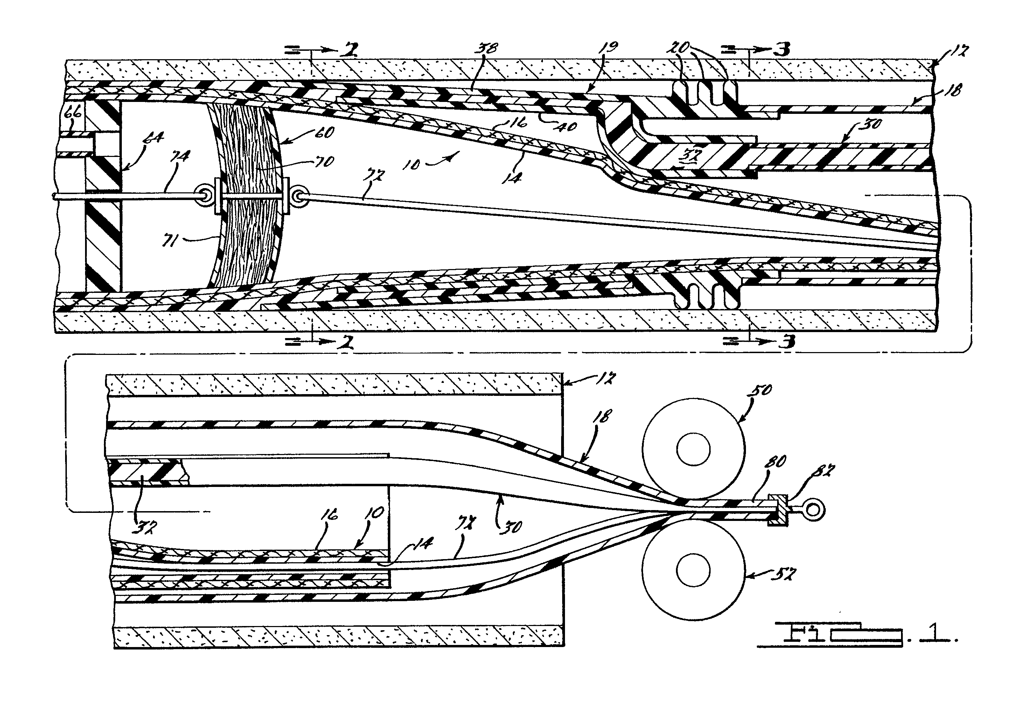

As seen in Figure 2, the manifold 19 comprises a pair of radially spaced sleeves 38,40. The sleeve 38 extends beyond the sleeve 40 to present the resin 32 to the liner 10 before it is presented to the inner surface of the pipe 12.

In operation, the whole assembly is passed through a length of sewer pipe and engaged between rollers 50,52. The ejector tube 18 and resin tube 30 are then retracted from the sewer pipe 12 by rollers 50,52 which are powered by a conventional gear and motor (not shown). As seen in Figure 1, the tube 30 is compressed by the rollers 50,52 and the resin 32 is squeezed from the tube 30 upon retraction thereof along with the ejector tube 18.

The amount of resin 32 used is based on the application and thickness of liner desired. A conventional resin system may be used, for example, 100 parts of resin, 80 parts of curing agent, 10 parts of accelerator, and 20 parts of diluent.

As seen in Figure 1, a pig 60 is adapted to be pushed through the installed liner 10 by a pressure differential across the pig 30 or pulled through the liner 10 by a cable 72. Radial outward compression of the fiberglass mat 16 forces the resin 32 therein into contact with the pipe 12.

The end of the liner 10 into which the pig 60 is introduced is closed by a plug 64 having an air line 66 connected thereto for the admittance of pressurized air. In this manner, radial expansion of the liner 10 is achieved by air pressure. Moreover, the lining 10 is maintained in the radially expanded condition by air pressure after passage of the pig 60 to facilitate polymerization of the resin 32.

The pig 60 comprises a central core of radially extending bristles 70. A rubber diaphragm 71 is mounted at the rear end of the pig 60 to ensure the creation and maintenance of an air pressure differential across the pig 60. The bristles 70 of the pig 60 function as a bearing for the pig 60 to minimize drag induced by the diaphragm 71 due to sliding engagement with the liner membrane 14.

Assembly of the liner 14 in the damaged pipe 12 is initiated by introducing the ejector tube 18 and internally disposed liner 10 into the pipe 12. A leading end 80 of the ejector tube 18 is closed as by a clip 82 so that the interior thereof is air and water tight upon insertion into the pipe 12.

The pig 60 is then introduced into the liner 10 followed by the end plug 64. Thereafter, the closed end 80 of the ejector tube 18 is inserted between the rollers 50,52 which, upon rotation, effect retraction of the ejector tube 18 and resin tube 30, squeezing the resin 32 therein toward the distribution manifold 19. The resin 32 flows circumferentially of the distribution manifold and outwardly of the distribution cones formed by sleeves 38,40 onto the exterior fiberglass layer 16 of the liner 10. The resin 32 is also injected onto the inner surface of the pipe 12.

Water entrapped interiorly of the damaged pipe 12, but exteriorly of the ejector tube 18, is removed by permitting entrapped water to flow outwardly of the pipe 12 ahead of the annular squeegees 20. Concomitantly, air under pressure is introduced through the air valve 66 in the plug 64 behind the pig 60 to force the pig 60 to move to the right, as seen in the drawing, under the influence of an air pressure differential across the pig 60. Movement of the pig 60 can be augmented or restrained by cables 72,74, respectively, as required.

It is to be noted that both air and water disposed between the ejector tube 18 and the inner wall of the pipe 12 are moved axially ahead of the squeegee rings 20 without contacting the liner 10. In this manner, the resin 32 injected between liner 10 and pipe 12 is clean and devoid of admixed water and air resulting in a liner free of voids and bonded to the pipe 12 upon polymerization of the resin 32.

As seen in Figure 4, a resin tube 30a can be disposed exteriorly of the ejector tube 18 so as to feed resin to a modified manifold 19a.

As seen in Figure 5, dual resin tubes 30b and 30c can be used to feed separate parts of the resin system 32 to a manifold 19b wherein they are mixed by a static 90° mixing head 90.

## Claims

1. A liner (10) for a pipe comprising an imperforate liner (14), an imperforate tube (18) surrounding said liner, a resin carrier tube (19) communicating with the exterior surface of said imperforate liner tube (14) and the interior surface of said pipe (12), a polymerizable resin (32) in said resin tube, means (50,52) for concomitantly retracting said imperforate tube (18) and said resin carrier tube (19) from said pipe (12), and means (38,40) for ejecting said resin (32) from said resin carrier tube (19) into contact with the exterior of said liner (14) and the interior surface of said pipe (12).

2. A liner according to claim 1, characterised in that said imperforate tube includes an ejection tube (18), an annular squeegee (20) on one end of said ejector tube (18) and engageable with an inner surface of said pipe (12), and in that said resin tube (19) extends from the other end of said ejector tube (18).

3. A liner according to claim 1 or 2, characterised in that said ejecting means comprises a pair of radially spaced coaxial sleeves (38,40).

4. A liner according to claim 3, characterised in that the radially outer sleeve (38) extends axially beyond the radially inner sleeve (40).

5. A liner according to any preceding claim, characterised in that said ejecting means comprises a mixing head (90) for mixing two parts of a resin system.

6. A liner according to any preceding claim, characterised in that said resin carrier tube (19) is disposed interiorly of said ejection means (38,40).

7. A liner according to any one of claims 1 to 5, characterised in that said resin carrier tube is disposed exteriorly of said ejection means (38,40).

8. A liner according to any preceding claim, characterised in that said retracting means comprises a pair of rollers (50,52).

9. A method of lining a pipe (12) comprising the steps of providing an imperforate pipe liner (14), surrounding said liner with an imperforate ejector tube (19) having squeegee means (20) at one end engageable with an interior wall of said pipe (12), inserting said ejector tube (19) and liner (14) into said pipe, retracting said ejector tube (19) relative to said liner (14) and pipe (12), concomitantly injecting a resin (32) onto an external surface of said liner and the internal surface of said pipe, and retracting said ejector tube from said pipe.

Fig. 1.

FIG. 2.

FIG. 3.

FIG. 4.

FIG. 5.

5

# EUROPEAN SEARCH REPORT

Application Number

## DOCUMENTS CONSIDERED TO BE RELEVANT

EP 90308635.3

| Category | Citation of document with indication, where appropriate, of relevant passages | Relevant to claim | CLASSIFICATION OF THE APPLICATION (Int. Cl.5) |
|---|---|---|---|
| X | <u>GB - A - 2 208 311</u><br>(CAMPELL H. STEKETEE JR.)<br>* Totality *<br>-- | 1 | F 16 L 55/162<br>F 16 L 58/10<br>F 16 L 1/028 |
| P,X | <u>DE - A1 - 3 932 106</u><br>(NU-PIPE INC.)<br>* Totality *<br>---- | 1 | |

TECHNICAL FIELDS SEARCHED (Int. Cl.5)

F 16 L 1/00
F 16 L 55/00
F 16 L 58/00

The present search report has been drawn up for all claims

| Place of search | Date of completion of the search | Examiner |
|---|---|---|
| VIENNA | 04-10-1990 | SCHUGANICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                      

& : member of the same patent family, corresponding document

EPO FORM 1503 03.82 (P0401)